# EUROPÄISCHE PATENTSCHRIFT

(11) **EP 0 489 293 B1**
(45) Veröffentlichungstag und Bekanntmachung des Hinweises auf die Patenterteilung: **26.03.1997**
(21) Anmeldenummer: 91119610.3
(22) Anmeldetag: 18.11.1991
(51) Int. Cl.: B29C 47/10, B29C 47/58

(54) **Schneckenextruder mit Speisewalze**
Screw extruder with feed roll
Extrudeuse à vis avec galet bourreur

(30) Priorität: 01.12.1990 DE 4038365
(43) Veröffentlichungstag der Anmeldung: 10.06.1992
(73) Patentinhaber: PAUL TROESTER MASCHINENFABRIK, D-30519 Hannover (DE)
(72) Erfinder: Baumgarten, Wilfried, Dipl.-Ing., W-3017 Pattensen (DE)
(74) Vertreter: Junius, Walther, Dr.

(56) Entgegenhaltungen:
- DE-C- 3 934 734
- GB-A- 536 421
- US-A- 1 422 561
- US-A- 2 537 395
- US-A- 4 718 770

## Beschreibung

Die Erfindung betrifft einen Schneckenextruder mit einer im Einzugstrichter angeordneten Speisewalze, an deren Umfang die Schneide eines Messers anliegt, welches einen Teil der die Schnecke mit Abstand umgebenden Zylinder- oder Gehäuseinnenwand bildet und mit der Kraft einer Feder an die Speisewalzenoberfläche angedrückt ist.

Bei Schneckenextrudern für die Verarbeitung von Kautschukmischungen sind zur Erleichterung der Beschickung schon frühzeitig Speisewalzen als Einzugshilfe angewendet worden, die jedoch aufgrund der Gefahr des Eindringens von Mischung in die Abdichtungsspalte, Lagerung sowie den Antrieb immer problematische Maschinenelemente waren. Wurden sie nämlich nicht gründlich und regelmäßig, insbesondere bei Betriebsunterbrechungen, gereinigt, so verhärteten oder vulkanisierten die eingedrungenen Mischungsbestandteile und blockierten die Speisewalze beim Wiederanlauf der Maschine, was oft zu schweren Beschädigungen führte.

Speisewalzen haben sich trotz dieser Probleme als unverzichtbar erwiesen, insbesondere bei den später entwickelten Schneckenextrudern für Kaltbeschickung gehören sie zum Standard, weil sie speziell bei härteren, zäheren Kautschukmischungen einen entscheidenden Anteil an der Plastifizierung schon bei der Fütterung übernahmen, was sich als sehr wichtig erwies. Extruder für Silikon-Verarbeitung sind ohne Speisewalze undenkbar.

Aus den oben angegebenen Gründen wurde den Abdichtungen der Walze in ihrer Einbausituation konstruktiv große Beachtung geschenkt, was allerdings nicht zuletzt wegen unvermeidlicher Verschleißerscheinungen im Laufe des Betriebes immer unvollkommen blieb. Ein wesentlicher Punkt in diesem Zusammenhang ist die kontinuierliche Säuberung des Speisewalzenmantels mit Hilfe eines Schabemessers, welches zumeist anstellbar ist. Besonders bei kaltbeschickten Schneckenextrudern treten große Kräfte durch die Plastifizierarbeit zwischen der Schnecke und der Speisewalze auf, die die Walze im Zyklus dieser Kräfte elastisch ausweichen lassen. Diese elastische Verformung ergibt zyklisch eine zu geringe Anpreßkraft des Schabemessers oder einen winzigen Spalt zwischen der Speisewalzenmantelfläche und dem fest angestellten Schabemesser, durch den sich dann ein Belag auf der Walze bildet, der aufgrund der hohen Temperatur der Walze leicht anvulkanisieren kann. Dieses kann sehr nachteilig sein und muß vermieden werden.

Eine oft angewendete Kühlung der Speisewalze, die bei bestimmten Kautschukmischungen aus thermischen Gründen erforderlich ist, löst das Problem des Anhaftens mit der Anvulkanisationsgefahr nicht.

Wie die US-PS 1,422,561 zeigt, ist bereits um 1920 versucht worden, durch federnde Anpressung des Schabemessers, also mit konstanter Anpreßkraft, die kontinuierliche Reinigung des Speisewalzenmantels zu erzielen. Dafür ist aber Voraussetzung, daß die Führung des Schabemessers während des Betriebes leicht beweglich bleibt, was wegen der selbst in feinste Spalte eindringenden Kautschukmischung nicht gesichert ist. Auch wesentlich stärkere Federn würden nicht ausreichen, die Beweglichkeit zu garantieren, hätten dann aber auch den Nachteil, durch die extrem starke Anpressung des Schabemessers einen hohen Verschleiß an Messer und/oder Walze zu bewirken. Das gleiche ist für stärkere Messeranpressung durch pneumatische, hydraulische oder elektrische Kraftbetätigungen der Fall.

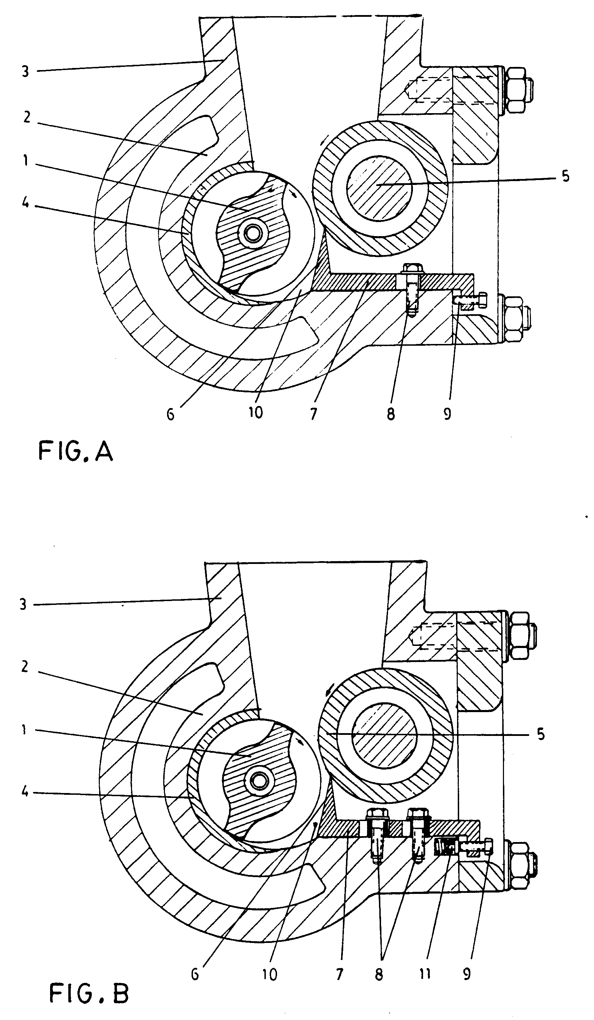

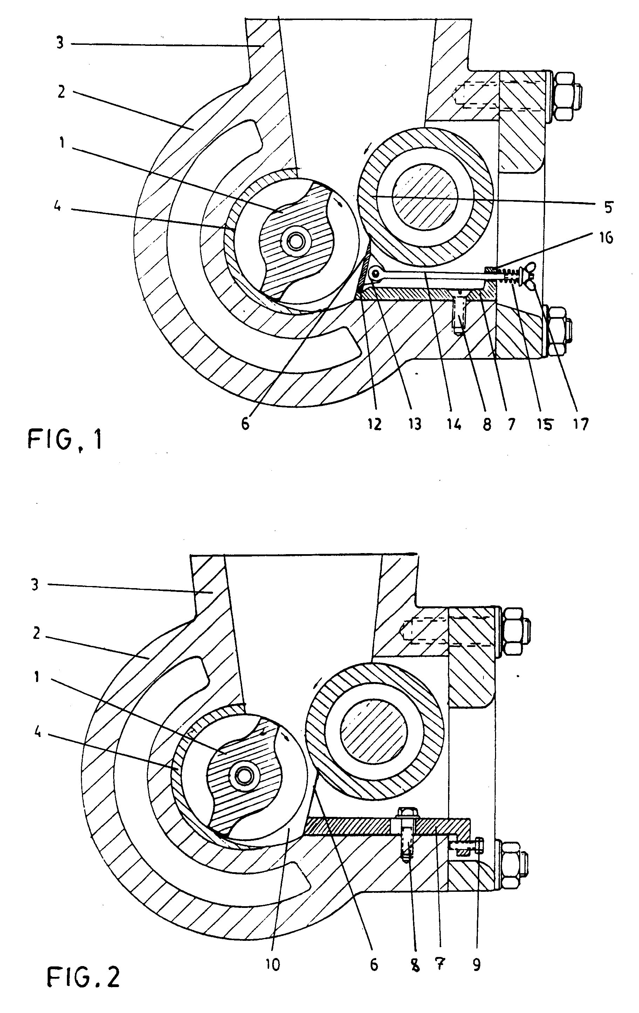

Durch die GB-A-536421 sind verschiedene Schaberanordnungen bekannt geworden, die die Oberfläche der Speisewalze von anhaftenden Kautschukmischungen freihalten sollen. In der Ausführungsform der Fig. 1 ist ein Schaber mit verdicktem Ende gezeigt, der von einer Feder, sich am Gehäuse des Extruders abstützend, gegen die Walzenoberfläche gezogen wird. Diese Konstruktion ist jedoch nur dort verwendbar, wo die Speisewalze nicht unter dem im Einzugsspalt herrschenden Druck elastisch ausweicht, denn bei einem elastischen Ausweichen der Speisewalze würde das verdickte Ende des Schabers sich zwischen dem Gehäuse und der Speisewalze derart verklemmen, daß ein weiterer Betrieb unmöglich wird. Deshalb schlägt diese Druckschrift auch eine Reihe von feststehenden Schaberanordnungen vor. Eine weitere in Fig. 15 gezeigte Ausführungsform zeigt einen wippenartig gelagerten Schaber, der von zwei Federn in Arbeitsposition gezogen wird. Dieser Schaber weist eine mechanisch unbestimmte Position auf, weil er sich nicht um einen bestimmten Drehpunkt dreht, und neigt daher zum Verklemmen.

Wie die DE-PS 39 34 734 zeigt, versucht man die Schabemesser-Abdichtproblematik so zu lösen, daß eine konstante Messeranpreßkraft als Ziel postuliert wird. Hierbei wird ein sehr aufwendiges Kraftmeßsystem an der Speisewalzenlagerung vorgesehen, mit dem die bei der Streifen- oder Granulatbeschickung laufend wechselnde Belastung der Speisewalze zwischen Schnecke und Speisewalzenmantel im Einzugsbereich gemessen wird. Gemäß dieser wechselnden Belastung soll dann die Anpreßkraft konstant gehalten werden. Auch hierbei ist ein ständig leicht bewegliches, d.h. in der Führung nicht verschmutztes oder durch Anvulkanisation blockiertes Schabemesser Voraussetzung, was in der Praxis allenfalls im kurzzeitigen Laborbetrieb funktioniert. Nun kann aber eine konstante Anpreßkraft des Schabemessers an der Walze die Reinigungsaufgabe nicht optimal erfüllen. Denn, wenn die Walze wegen hohen Massedruckes elastisch ausweicht, muß die Messerandruck-Kraft größer sein als dann, wenn kein oder nur ein geringer Druck auf die Speisewalze wirkt. Daher ist eine konstante Anpreßkraft, die sich an der höchsten Abdichtbelastung des Messers orientiert, im Sinne der Verschleißvermeidung sehr nachteilig. Diese Bauart ist daher nicht nur sehr teuer, sondern auch praktisch nicht sinnvoll.

Eine Schabemesserbauart, die nicht die leichte Verschiebbarkeit für eine ständige Anpressung des Schabemessers an die Walze voraussetzt, ist in der US-PS 2,537,395 aufgezeigt. Hierbei ist das Messer nicht abgewinkelt, sondern einfach annähernd tangential an der Speisewalze angeordnet. Diese Bauart stammt aus einer Zeit, als eine Kaltbeschickung mit den daraus resultierenden hohen Kräften auf die Speisewalze noch nicht bekannt war. Bei der damals üblichen Extruder-Warmbeschickung wurde ausschließlich mit vorgewärmter Kautschukmischung beschickt, was nur geringe Kräfte zwischen Schnecke und Walze verursachte. Die Walzen dienten nur als Einzugshilfe, nicht dagegen zur Mischungsvorplastifizierung. Die Messerbauart und -anordnung war daher völlig starr, da ein elastisches Ausweichen der Walze praktisch nicht vorkam und daher ein festes bei der Inbetriebnahme des Extruders optimal eingestelltes Schabemesser den damaligen Anforderungen genügte.

Die Erfindung vermeidet die Nachteile des Standes der Technik. Der Erfindung liegt die Aufgabe zugrunde, eine höchst einfache, jedoch hoch wirksame Schabemesser-Bauart und -Anordnung zu schaffen, welche bei minimalem Messer- und Speisewalzenverschleiß mittels möglichst geringen, gegebenenfalls wechselnden und nicht überhöhten Anpreßkräften eine optimale Abdichtung und Reinigung des Walzenmantels gewährleistet.

Die Erfindung besteht darin, daß das Messer in seinem Anstellwinkel zur Speisewalze beweglich ist.

Mit dieser höchst einfachen Anordnung sind die teuren Aufwendungen für eine Meß- und Steuertechnik vermieden. Die hervorragende Schabeleistung ist dadurch erreicht, daß das Schabemesser durch eine spezielle Anordnung, nämlich Schwenkbarkeit oder elastische Verformung des Messers, beweglich gestaltet wird und zwar so, daß diese Beweglichkeit nicht durch in etwaige Spalte eindringende Kautschukmischung behindert werden kann.

Eine Ausführungsmöglichkeit besteht darin, daß das Messer in sich starr ist, mit seinem Rücken in einem Verschwenklager gelagert ist und mittels einer Feder mit seiner Schneide an den Umfang der Speisewalze gezogen ist.

Eine andere Ausführungsmöglichkeit besteht darin, daß das Messer in sich federnd biegsam ist.

Erfindungsgemäß geschieht dieses z.B. durch eine extrem dünne Gestaltung des etwa tangential angestellten Schabemessers. Bei diesem würde evtl. unerwünschterweise durchtretendes Material frei nach außen fallen können oder wie bekannt, durch einfache Fördermittel an der Walze wieder in den Extrudertrichter zurückgeführt werden können, ehe ein Ankleben und Druckaufbau und/oder Anvulkanisieren erfolgen kann. Weiterhin kann erfindungsgemäß ein solches Schabemesser in einfachster Bauart mit konstanter Leerlaufanpreßkraft ausgebildet werden, welche einstellbar sein kann und zwar so, daß die Minimalanforderung für das Abschaben eines an der Walze anhaftenden Kautschukfilmes vorhanden ist. Dieses geschieht durch die an sich bekannte, einstellbare und federnde Anstellung des dünnen Schabemessers, vorzugsweise auch durch eine elastische Verformung des dünnen federnd ausgebildeten Schabemessers. Dabei kann erfindungsgemäß der bei der Beschickung entstehende Massedruck zwischen Schnecke und Speisewalze das bewegliche Schabemesser zusätzlich zur minimalen Vorspannung so beaufschlagen, daß die Anpreßkraft des Schabemessers belastungsabhängig variiert. Dadurch wird erreicht, daß immer die momentan optimale Messeranpressung und Abschabewirkung vorliegt, dabei aber hauptsächlich auch bei Leerlauf und bei geringer Belastung ein übermäßiger Verschleiß an Messer und Walze vermieden wird.

In weiterer Ausbildung der Erfindung kann zur Optimierung der Messeranpreßkraft eine automatische Anstellkraft-Regeleinrichtung, bestehend aus einem Sensor und einem an sich bekannten Stellmittel für die Messeranstellkraft, vorgesehen werden. Dabei soll der Sensor erfassen, ob der Speisewalzenmantel gerade sauber, also blank ist, oder ob gerade eine dünne Kautschukschicht anhaftet. Da Kautschukmischungen meistens schwarz, gelegentlich auch farbig sind, kann als Sensor in einfacher Weise z.B. eine Fotozelle verwendet werden, die die Reflexion eines auf den Mantel der Speisewalze gerichteten Lichtstrahles erfaßt. Bei einem optimal ausgewählten und eingestellten Sensor kann selbst bei weißen Kautschukmischungen ein Impuls erfolgen, der dann die Messeranstellkraft z.B. in geringen Stufen allmählich so weit erhöht, bis die Walze wieder sauber abgeschabt, also blank ist. Gleichermaßen kann durch eine Umkehrschaltung die Messerkraft beim Mischungswechsel dann gegebenenfalls wieder soweit vermindert werden, wie es die Haftfähigkeit der Mischung zuläßt. Auf diese Weise läßt sich die Mindestanpreßkraft des Schabemessers stets und automatisch optimieren.

Das Wesen der Erfindung ist nachstehend anhand von in der Zeichnung schematisch dargestellten Ausführungsbeispielen näher erläutert. Die Zeichnung zeigt Querschnittsdarstellungen, und zwar:
- Fig. A: Eine Ausführungsform der Anordnung des Messers im Extruder an der Speisewalze gemäß dem Stand der Technik,
- Fig. B: eine andere Ausführungsform gemäß dem Stande der Technik,
- Fig. 1: eine erfindungsgemäße Ausführungsform mit in sich starren, aber beweglich angeordnetem Messer,
- Fig. 2: eine andere erfindungsgemäße Ausführungsform mit in sich federndem Messer,
- Fig. 3: die Messerstellung bei geringer und starker Belastung,
- Fig. 4: eine weitere erfindungsgemäße Ausführungsform mit vorgespanntem in sich federnden Messer,
- Fig. 5: eine sensorgesteuerte erfindungsgemäße Ausführungform,

In den Fig. A und B sind Schnitte durch ein Extruder-Trichterstück gezeigt. In das die Schnecke l aufnehmende Gehäuse 2 ist ein Trichter 3 für die Materialbeschickung eingeformt. Die Schnecke l ist auf einem Teil ihres Umfanges von einer Verschleißschutzbuchse 4 umgeben, welche fest im Gehäuse 2 eingebaut ist. In dem Gehäuse 2 ist unterhalb des Trichters 3 eine Speisewalze 5 eingebaut. Trotzdem die nicht dargestellten Lager fest eingebaut sind, ist aufgrund der großen Kräfte ein geringes elastisches Ausweichen der Walze unvermeidbar. Diese Speisewalze weist in den meisten Fällen eine Kühlvorrichtung auf. Im Stande der Technik werden an der Oberfläche der Speisewalze 5 anhaftende Massen durch ein starres Schabemesser 6 entfernt. Dieses Schabemesser ist oftmals einstückig mit einer Halterung 7 hergestellt, die mittels Befestigungsschrauben 8 im Gehäuse 2 zu befestigen ist und mittels Justierschrauben 9 einstellbar ist. Die Drehrichtung der Schnecke und der Speisewalze ist durch Pfeile angegeben. Hinter dem Spalt zwischen Schnecke 1 und Speisewalze 5 unmittelbar hinter dem Schabemesser 6 ergibt sich vor der Verschleißschutzbuchse 4 eine Einzugstasche l0, die in die Buchse 4 zumeist gewindeartig eingearbeitet ist. In diesem Bereich erfolgt eine sehr starke Durcharbeitung und Plastifizierung der eingezogenen Masse, welche zu einem erheblichen Druckaufbau in dieser Einzugstasche führt, der sowohl auf die Speisewalze als auch auf die Seitenfläche des Schabemessers 6 wirkt. Die Speisewalze 5 wird unter dem sich hier aufbauenden Druck von der Schnecke 1 elastisch weggedruckt. Ist das starr aufgebaute und starr in der Messerhalterung 7 befestigte Schabemesser 6, wie in Fig. A dargestellt, fest eingebaut, entsteht ein Spalt zwischen dem Schabemesser 6 und der Speisewalze 5, der den Aufbau eines Materialfelles auf der Speisewalze 5 selbst dann zuläßt, wenn, wie in Fig. B gezeigt, die Messerhalterung 7 verschiebbar entgegen der Kraft einer Feder ll elastisch an die Oberfläche der Speisewalze angedrückt ist. Der Aufbau eines solchen Felles auf der Speisewalze ist in hohem Maße unerwünscht.

Durch die vorliegende Erfindung wird der Aufbau eines solchen Felles auf der Speisewalze 5 verhindert.

Im Ausführungsbeispiel der Fig. 1 ist die Messerhalterung 7 starr gelagert. Die Messerhalterung 7 weist an ihrem der Schnecke 1 zugewandten Ende eine Lagerpfanne 12 für das in sich starre Schabemesser 6 auf, welches mit seinem Rücken in dieser Lagerpfanne 12 liegt. Auf der der Schnecke 1 abgekehrten Seite weist das Schabemesser 6 eine Halterung 13 für einen Lenker 14 auf, welcher die Schneide des Schabemessers 6 gegen die Oberfläche der Speisewalze 5 zieht. Der Lenker 14 ist durch ein Loch der am Ende abgewinkelten Messerhalterung 7 geführt. Auf diese Abwinkelung 16 stützt sich die Feder ll ab, welche mittels der Mutter 17 verschieden stark vorgespannt werden kann. Die Mutter 17 ist auf ein am Ende des Lenkers 14 geschnittenes Gewinde aufgeschraubt.

Im Ausführungsbeispiel der Fig. 2 ist das Messer 6 in sich selbst federnd, die Messerhalterung 7 ist fest eingebaut, die Justierschrauben 9 dienen zur Einstellung einer geeigneten Vorspannung. Da das Messer aus elastischem Federstahl hergestellt ist, wird es durch den Druck der Masse in der Einzugstasche l0 gegen die Speisewalzenoberfläche gedrückt. Der Andruck ist umso stärker, je stärker der Druck der Masse ist. Dadurch bleibt auch bei zurückgedrückter Speisewalze immer eine gute Anlage des Schabemessers an der Speisewalzenoberfläche gewährleistet.

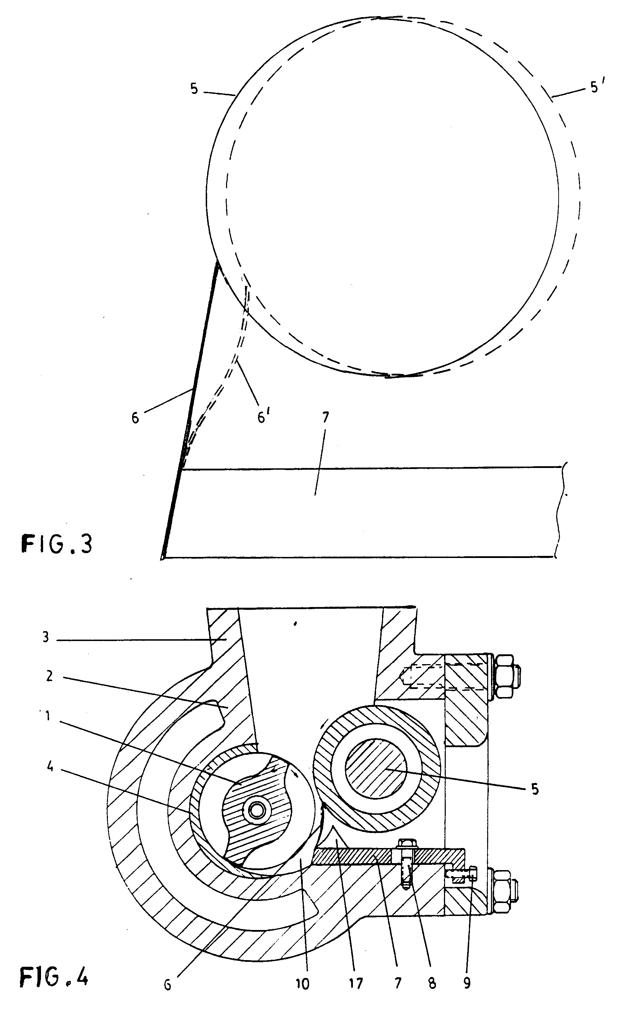

Fig. 3 zeigt die Messerstellung bei geringer Belastung, d.h. geringem Druck in der Einzugstasche l0 in voll ausgezogenen Strichen, während strichlierte Linien die Stellung des Messers 6 und der Speisewalze 5 bei starker Belastung zeigen.

In der Ausführungsform der Fig. 4 ist das zylinderschalenförmig gekrümmte Schabemesser 6 so gestaltet, daß es sich bei starkem Druck gegen Abstütznocken l7 legen kann, welche ein zu starkes Durchfedern dieses Schabemessers 6 verhindern.

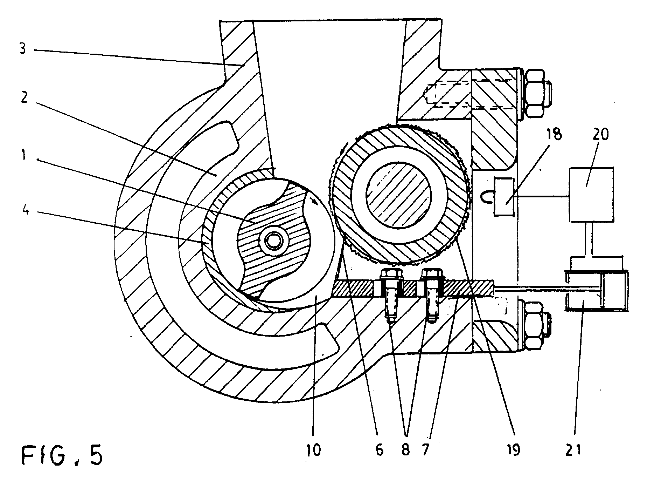

In Fig. 5 ist eine sensorgesteuerte erfindungsgemäße Ausführungsform gezeigt. Durch einen Sensor l8 wird festgestellt, ob sich ein Materialfell l9 auf der Speisewalze 5 aufbaut. Ist dieses der Fall, wird mit Hilfe einer Steuerungsvorrichtung 20 Druckmedium in einen hydraulischen oder pneumatischen Servomotor 21, welcher durch eine Kolben-Zylinder-Einheit gebildet ist, eingelassen und das in sich federnd ausgebildete Schabemesser 6 mittels der verschiebbaren Messerhalterung 7 stärker gegen die Oberfläche der Speisewalze 5 angezogen. Dadurch erfolgt ein verstärktes Abschaben des Felles l9.

Die Darstellung der Auslenkung des in sich federnden Messers 6 in Fig. 3 ist stark übertrieben dargestellt. Auch ist in Fig. 4 die Ausweichmöglichkeit für das Messer 6 stark übertrieben dargestellt, der Abstand zwischen dem Messer 6 und den Nocken 17 ist im Normalfall erheblich geringer.

## Patentansprüche

1. Schneckenextruder
mit einer im Einzugstrichter (3) angeordneten Speisewalze (5), an deren Umtang die Schneide eines Messers (6) anliegt, welches einen Teil der die Schnecke (1) mit Abstand umgebenden Zylinder- oder Gehäuseinnenwand bildet und mit der Kraft einer Feder an die Speisewalzenoberfläche angedrückt ist,
dadurch gekennzeichnet,
daß das Messer (6) in seinem Anstellwinkel zur Speisewalze (5) derart federnd beweglich ist, daß es bei elastischem Ausweichen der Speisewalze (5) infolge hoher beim Einzug auftretender Kräfte immer an der Speisewalzenoberfläche anliegt.

2. Schneckenextruder nach Anspruch 1,
dadurch gekennzeichnet,
daß das Messer (6) in sich starr ist, mit seinem Rücken in einen Verschwenklager (l2) gelagert ist und mittels einer Feder (ll) mit seiner Schneide an den Umfang der Speisewalze (5) gezogen ist.

3. Schneckenextruder nach Anspruch l,
dadurch gekennzeichnet,
daß das Messer (6) in sich federnd biegsam ist.

4. Schneckenextruder nach Anspruch 3,
dadurch gekennzeichnet,
daß hinter dem Messer (6) Stützen (l7) angeordnet sind, an die sich das Messer (6) bei hohen Drücken anlegt.

5. Schneckenextruder nach Anspruch 1,
mit einem mittels eines Stellmotors, der durch einen Sensor gesteuert ist, verschiebbaren Messerhalter,
dadurch gekennzeichnet,
daß der Sensor (18) ein Gerät zur Feststellung einer Schicht auf der Speisewalze, insbesondere ein Dickenmeßgerät, ist.

## Claims

1. Screw extruder with a feed roller (5) which is disposed in the feed hopper (3) with a knife (6) whose blade bears on the circumference of the feed roller and which forms a part of the cylinder or housing inner wall surrounding the screw (2) at a distance and is pressed against the surface of the feed roller with the force of a spring, characterised in that the knife (6) is movable resiliently in its angle of attack relative to the feed roller (5) such that it always bears on the surface of the feed roller when the feed roller (5) yields elastically due to high forces arising during feeding.

2. Screw extruder according to claim 1, characterised in that the knife (6) is rigid per se, is mounted by its back in a swivelling mounting (12) and is pulled by its blade to the circumference of the feed roller (5) by means of a spring (11).

3. Screw extruder according to claim 1, characterised in that the knife (6) is resiliently flexible per se.

4. Screw extruder according to claim 3, characterised in that behind the knife (6) there are supports (17) against which the knife (6) rests when pressures are high.

5. Screw extruder according to claim 1, with a knife holder which is displaceable by means of a control motor which is controlled by a sensor, characterised in that the sensor (18) is a device for detecting a coating on the feed roller, in particular a thickness measuring device.

## Revendications

1. Extrudeuse à vis
comportant un rouleau d'alimentation (5), placé dans la trémie d'alimentation (3), sur le pourtour duquel s'applique la lame d'un couteau (6), qui forme une partie de la paroi intérieure du cylindre ou du carter entourant à distance la vis (1) et est pressée avec la force d'un ressort contre la surface du rouleau d'alimentation,
caractérisée
en ce que le couteau (6) est mobile élastiquement dans son angle d'inclinaison par rapport au rouleau d'alimentation (5), de manière qu'en cas d'évitement élastique du rouleau d'alimentation (5) par suite de forces importantes survenant lors de l'alimentation, il s'applique toujours contre la surface du rouleau d'alimentation.

2. Extrudeuse à vis selon la revendication 1,
caractérisée
en ce que le couteau (6) est rigide en soi, est monté avec son dos dans un palier de pivotement (12) et est tiré au moyen d'un ressort (11) avec sa lame contre le pourtour du rouleau d'alimentation (5).

3. Extrudeuse à vis selon la revendication 1,
caractérisée
en ce que le couteau (6) est en soi flexible de manière élastique.

4. Extrudeuse à vis selon la revendication 3,
caractérisée
en ce que derrière le couteau (6) sont placés des appuis (17) contre lesquels s'applique le couteau (6) en cas de pressions élevées.

5. Extrudeuse à vis selon la revendication 1,
avec un parte-couteau, déplaçable au moyen d'un servomoteur, qui est commandé par un capteur,
caractérisée
en ce que le capteur (18) est un appareil destiné à constater une couche sur le rouleau d'alimentation, en particulier un appareil de mesure d'épaisseur.
